# EUROPEAN PATENT SPECIFICATION

(11) **EP 3 674 552 B1**
(45) Date of publication and mention of the grant of the patent: **09.03.2022**
(21) Application number: 19218921.5
(22) Date of filing: 20.12.2019
(51) Int. Cl.: F04C 18/12, F04C 25/02, F04D 19/04, F04D 29/063, F16N 7/36, F16C 33/66, F04D 29/059

(54) **BEARING APPARATUS AND VACUUM PUMP APPARATUS**
LAGERVORRICHTUNG UND VAKUUMPUMPENVORRICHTUNG
APPAREIL DE PALIER ET APPAREIL DE POMPE À VIDE

(30) Priority: 28.12.2018 JP 2018247320; 13.11.2019 JP 2019205277
(43) Date of publication of application: 01.07.2020
(60) Divisional application: 21211686.7
(73) Proprietor: Ebara Corporation, Tokyo 144-8510 (JP)
(72) Inventor: NAGAYAMA, Masami, Tokyo, 144-8510 (JP)
(74) Representative: Schmidbauer, Andreas Konrad

(56) References cited:
- CH-A- 329 135
- CN-A- 1 487 202
- CN-B- 105 443 432
- DE-U1-202009 013 629
- FR-A- 578 390
- JP-A- S5 563 094
- JP-U- S5 579 656
- US-A- 1 992 818
- US-A- 2 719 667

## Description

### BACKGROUND OF THE INVENTION

### Field of the Invention:

The present invention relates to a bearing apparatus and a vacuum pump apparatus.

### Description of the Related Art:

A vacuum pump (for example, a vacuum pump for exhausting a process gas, a high pumping speed vacuum pump, or the like) used for manufacturing a semiconductor and/or a flat panel such as an organic EL, liquid crystal is known.

### Citation List

### Patent Literature

Japanese Laid-Open Utility Model Publication No. 06-53793 B:
In recent years, in the semiconductor manufacturing and/or the flat panel manufacturing, a flow rate of a process gas introduced into a process chamber has been increased due to performance enhancement of a semiconductor and/or enlargement of a panel. Under such circumstances, it is necessary to maintain the pressure in the process chamber at a certain pressure.

From the above-described necessity, a vacuum pump having a high pumping speed is required as a vacuum pump for exhausting the process gas, and a size of the vacuum pump is also increasing. However, as the size of the vacuum pump increases, an installation space of the vacuum pump apparatus in a semiconductor manufacturing plant and/or a flat panel manufacturing plant increases, and there is a problem in securing the installation space.

Moreover, US 2 719 667 A discloses a lubricating system for rotating equipment having a vertical shaft, and specifically a dirt trap for lubricating oil used in rotating equipment having a vertical axis of rotation.

JP S55-79656 U relates to a bearing of a vertical rotary electric machine and a method for preventing oil leakage therein, the bearing consisting of a bearing housing, a bearing bracket and a cover covering the bearing bracket.

FR 578 390 A discloses a device for lubricating bearings on vertical shafts, the device for lubricating ball or roller bearings being fixed on vertical shafts of machines such as spinners, centrifuges, filters, etc.

JP S55 63094 A discloses a device for lubricating bearings on vertical shafts according to the preamble of claim 1.

### SUMMARY OF THE INVENTION

In accordance with the present invention, a bearing apparatus and a vacuum pump apparatus as set forth in Claims 1 and 8, respectively, is provided. Further embodiments of the invention are inter alia disclosed in the dependent claims. In order to reduce the installation space, it is conceivable that the vacuum pump apparatus is arranged vertically and is operated at a higher speed (for example, 4000 min⁻¹ or more). However, the vacuum pump apparatus includes a bearing apparatus for supporting a shaft of the vacuum pump apparatus. Therefore, it is necessary to ensure a reliability sufficiently of the vacuum pump apparatus.

It is therefore an object of the present invention to provide a bearing apparatus capable of reducing the installation space of the vacuum pump apparatus and sufficiently exhibiting a function of the bearing. It is therefore an object of the present invention to provide a vacuum pump apparatus including the bearing apparatus.

Further, when a vertically arranged vacuum pump apparatus is employed, lubricating oil in the bearing apparatus may leak below the bearing apparatus due to gravity and an effect of a pressure difference between a bearing chamber and a pump chamber.

It is therefore an object of the present invention to provide a bearing apparatus capable of reducing the installation space of the vacuum pump apparatus and reliably preventing leakage of the lubricating oil. It is therefore an object of the present invention to provide a vacuum pump apparatus including the bearing apparatus.

According to the invention, there is provided a bearing apparatus comprising: a bearing configured to support a shaft extending in a vertical direction; a bearing housing configured to house the bearing; a rotating cylinder disposed below the bearing housing and fixed to the shaft, the rotating cylinder comprising a slope formed on an outer circumferential surface of the rotating cylinder; and a bearing casing housing the bearing, the bearing housing, and the rotating cylinder.

According to the invention, the rotating cylinder comprises an outer cylindrical portion disposed radially outwardly the bearing, and an upper end of the outer cylindrical portion is arranged at a position higher than a lower end of a roller of the bearing.

In an embodiment, the slope is disposed in a gap between the outer circumferential surface of the rotating cylinder and an inner surface of the bearing casing.

In an embodiment, the slope extends obliquely downward from an upper end of the rotating cylinder toward a lower end of the rotating cylinder in a rotation direction of the rotating cylinder and is inclined with respect to an axial direction of the shaft.

In an embodiment, the bearing housing comprises a tray configured to guide lubricating oil to the bearing while receiving the lubricating oil scooped up by a rotation of the slope.

In an embodiment, the bearing casing comprises an upper end wall arranged above the rotating cylinder and the bearing, and the upper end wall has a tapered shape for guiding lubricating oil colliding with the upper end wall to the bearing.

In an embodiment, the rotating cylinder comprises a pressure adjustment hole providing communication between a space above the rotating cylinder and a space below the rotating cylinder.

In an embodiment, the bearing apparatus further comprises at least one of a first contact seal disposed between the rotating cylinder and the bearing casing and a second contact seal disposed between the bearing casing and the shaft.

In an embodiment, there is provided a vacuum pump apparatus comprising: a pair of pump rotors; a pair of shafts fixed to the pair of pump rotors, the pair of shafts extending in a vertical direction; a motor configured to rotate the pair of pump rotors; and a bearing apparatus described above.

The bearing apparatus can form a circulating flow of the lubricating oil therein. Therefore, the circulating lubricating oil can lubricate and cool the bearing by contacting with the bearing. As a result, each of the bearings can exhibit its function sufficiently.

A movement of the lubricating oil to an outside is blocked by alternately arranged a downward rib and an upward rib. Therefore, the bearing apparatus can prevent the leakage of the lubricating oil to the outside.

The movement of the lubricating oil to the outside is blocked by at least one of a first contact seal and a second contact seal. Therefore, the bearing apparatus can prevent the leakage of the lubricating oil to the outside.

### BRIEF DESCRIPTION OF THE DRAWINGS

FIG. 1 is a sectional view showing an embodiment of a vacuum pump apparatus;
FIG. 2 is a sectional view showing one embodiment of the bearing apparatus;
FIG. 3 is a view showing lubricating oil circulating inside the bearing apparatus;
FIG. 4 is a perspective view showing a rotating cylinder;
FIG. 5 is an enlarged view of the rotating cylinder;
FIG. 6 is an enlarged view of a tray;
FIG. 7A is a view showing a contact seal;
FIG. 7B is a view showing a contact seal;
FIG. 8 is a sectional view showing an unclaimed bearing apparatus useful for understanding the invention;
FIG. 9A is a view showing a contact seal applied to the bearing apparatus shown in FIG. 8;
FIG. 9B is a view showing a contact seal applied to the bearing apparatus shown in FIG. 8;
FIG. 10 is a sectional view showing still another unclaimed bearing apparatus useful for understanding the invention;
FIG. 11 is a view showing another lubricating-oil-supply structure;
FIG. 12 is a perspective view showing a lubricating-oil-scooping member;
FIG. 13 is a view showing the lubricating oil circulating inside the bearing apparatus;
FIG. 14 is a view showing another lubricating-oil-scooping member;
FIG. 15 is a view showing another movement guide;
FIG. 16 is a view showing the lubricating oil circulating inside the bearing apparatus;
FIG. 17 is a view showing another unclaimed vacuum pump apparatus useful for understanding the invention;
FIG. 18A is a view for explaining a problem that may occur in a vacuum pump apparatus arranged vertically;
FIG. 18B is a view for explaining a problem that may occur in the vacuum pump apparatus arranged vertically;
FIG. 19A is a view for explaining an effect of the vacuum pump apparatus as shown in FIG. 17; and
FIG. 19B is a view for explaining an effect of the vacuum pump apparatus as shown in FIG. 17.

### DESCRIPTION

Embodiments of the present invention will be described below with reference to the drawings. In the drawings described below, identical or corresponding components will be denoted by identical reference numerals, and repetitive descriptions thereof are omitted.

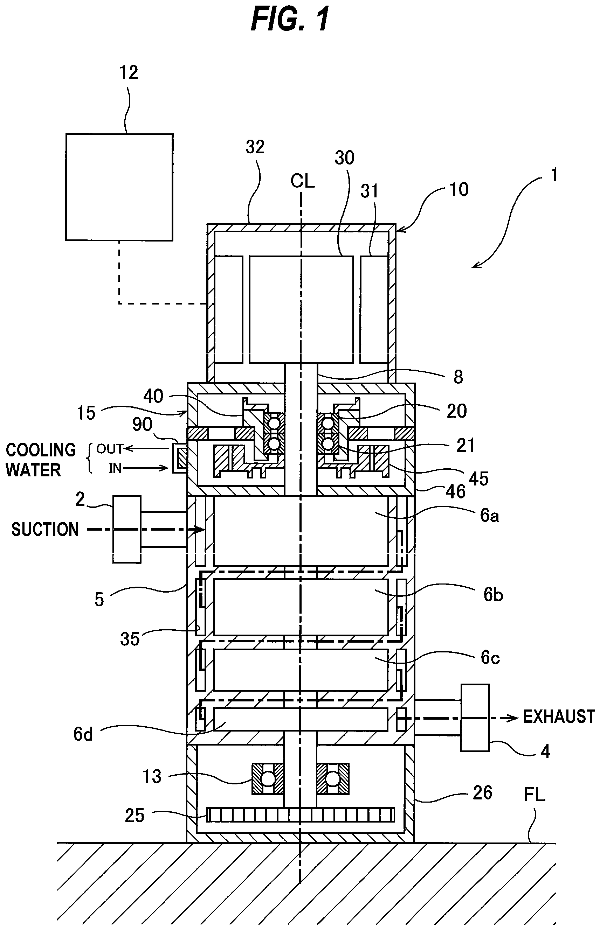

FIG. 1 is a sectional view showing an embodiment of a vacuum pump apparatus 1. As shown in FIG. 1, the vacuum pump apparatus 1 is a vertical vacuum pump apparatus arranged in an upright posture. In the embodiment shown in FIG. 1, the vacuum pump apparatus 1 is mounted on a floor FL. The vacuum pump apparatus 1 is a pump apparatus that rotates at a high speed. The vacuum pump apparatus 1 is arranged vertically to reduce an installation space of the vacuum pump apparatus 1.

The vacuum pump apparatus 1 includes a pair of pump rotors (roots rotors in this embodiment) 6a, 6b, 6c, and 6d arranged opposite to each other, a pair of shafts (drive shaft) 8 to which these pump rotors 6a to 6d are fixed, a pump casing 5 housing the pump rotors 6a to 6d, and a motor 10 for rotating the pump rotors 6a to 6d via the shaft 8.

In the embodiment shown in FIG. 1, the structures of the pump rotors 6a to 6d are not limited to the roots rotor. The pump rotors 6a to 6d may be claw rotors or screw rotors.

The vacuum pump apparatus 1 includes a suction port 2 for sucking a gas and an exhaust port 4 for discharging the gas. The gas is sucked into the vacuum pump apparatus 1 through the suction port 2 and discharged from the exhaust port 4 by an operation of the vacuum pump apparatus 1 (see the arrow in FIG. 1). The suction port 2 and the exhaust port 4 are provided in the pump casing 5.

The pump casing 5 has a gas passage 35 formed in the pump casing 5. The gas compressed by the pump rotors 6a to 6d is discharged from the exhaust port 4 through the gas passage 35.

In FIG. 1, only one of the pair of pump rotors 6a to 6d is illustrated, and an illustration of the opposite pump rotor is omitted. Only one of the pair of shafts 8 is illustrated, and an illustration of the opposite shaft is omitted. In FIG. 1, the number of stages of the pump rotor is four. The number of stages of the pump rotor is not limited to this embodiment. The number of stages of the pump rotor can be appropriately selected according to a required degree of vacuum, a flow rate of an exhaust gas, and the like. In one embodiment, a single stage pump rotor may be provided.

The vacuum pump apparatus 1 includes an operation controller 12 for controlling the operation of the vacuum pump apparatus 1. The operation controller 12 is electrically connected to the motor 10. The operation controller 12 is configured to control a rotation and a stop operation of the pump rotors 6a to 6d by driving and stopping the motor 10.

The shaft 8 extends in a vertical direction, and is rotatably supported by a bearing 13 and a bearing apparatus 15 (more specifically, bearings 20 and 21 provided on the bearing apparatus 15). The bearing 13 is disposed at one end portion (i.e., a lower end portion) of the shaft 8. The bearing apparatus 15 (more specifically, the bearings 20 and 21) is disposed at the other end portion (i.e., an upper end portion) of the shaft 8.

Timing gears 25 meshing with each other are provided at one end of the shafts 8. These timing gears 25 are housed in a gear cover 26 together with the bearing 13. In FIG. 1, only one of the pair of timing gears 25 is illustrated. In the embodiment shown in FIG. 1, the timing gears 25 are disposed below the pump rotors 6a to 6d. In one embodiment, the timing gears 25 may be disposed above the pump rotors 6a to 6d.

The motor 10 includes a motor rotor 30 fixed to at least one of two shafts 8, a motor stator 31 having a stator core on which a coil is wound, and a motor frame 32 for housing the motor rotor 30 and the motor stator 31. The motor stator 31 is arranged so as to surround the motor rotor 30, and is fixed to an inner circumferential surface of the motor frame 32.

When the motor 10 is driven, the pair of pump rotors 6a to 6d is rotated in opposite directions via the timing gear 25, and a gas is sucked into the pump casing 5 through the suction port 2. The sucked gas is transferred a downstream by the pump rotors 6a to 6d and discharged from the exhaust port 4.

The vacuum pump apparatus 1 is a pump apparatus for rotating at a high speed and is arranged vertically. Therefore, the bearing apparatus provided in the vacuum pump apparatus 1 also needs to be arranged vertically. However, if a bearing apparatus having a general structure is employed as it is in the vacuum pump apparatus 1 capable of a high-speed operation, lubricating oil for lubricating and cooling each of the bearings 20 and 21 may be not sufficiently supplied to the bearings 20 and 21. In this case, each of the bearings 20 and 21 cannot exhibit its function sufficiently. Therefore, in this embodiment, the vacuum pump apparatus 1 includes the bearing apparatus 15 having a structure capable of sufficiently exhibiting the functions of the bearings 20 and 21. Hereinafter, the structure of the bearing apparatus 15 will be described with reference to the drawings.

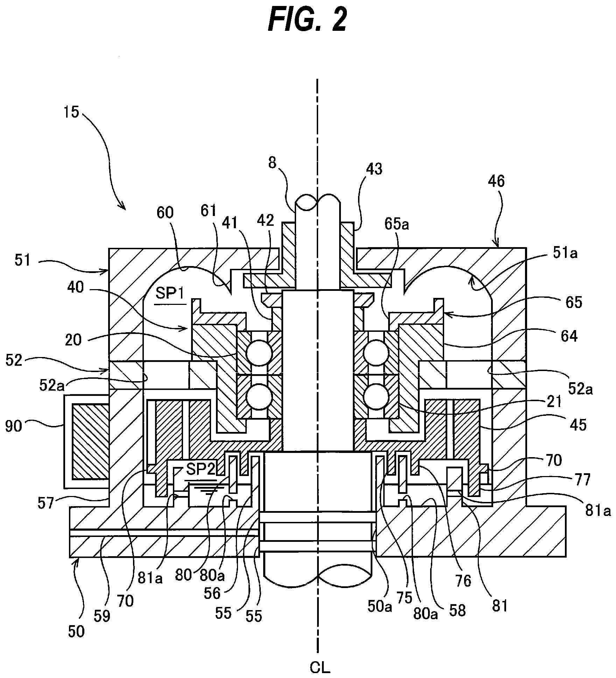

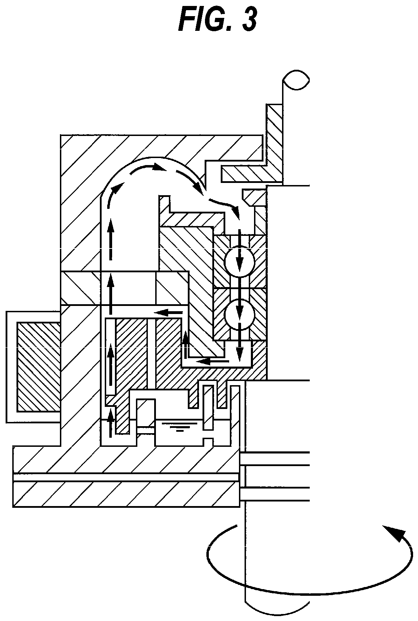

FIG. 2 is a sectional view showing one embodiment of the bearing apparatus 15. The bearing apparatus 15 is an oil circulation type bearing apparatus in which lubricating oil circulates inside the bearing apparatus 15. FIG. 3 is a view showing the lubricating oil circulating inside the bearing apparatus 15. In FIG. 3, reference numerals are omitted for the purpose of making it easier to view the drawing. In FIG. 3, a flow of the lubricating oil is represented by arrows.

As shown in FIG. 2, the bearing apparatus 15 includes the bearings 20 and 21 for supporting the shaft 8 which extends in the vertical direction, a bearing housing 40 for housing the bearings 20 and 21, a rotating cylinder 45 which can be fixed to the shaft 8, and a bearing casing 46 for housing the bearings 20 and 21, the bearing housing 40, and the rotating cylinder 45.

The bearings 20, 21 are arranged in series in the vertical direction. The bearings 20 and 21 are bearings that receive a thrust load and a radial load on the shaft 8. The bearing housing 40 houses the bearings 20 and 21, and is arranged concentrically with the shaft 8 and the bearings 20 and 21. In this embodiment, two bearings 20, 21 are provided, however the number of bearings is not limited to this embodiment. In one embodiment, a single bearing may be provided. Further, in one embodiment, a free-side bearing that receives only the radial load may be provided.

A spacer 41 mounted on the shaft 8 and a fixture (for example, a shaft nut) 42 fixed to the shaft 8 via the spacer 41 are arranged above the bearing 20. The spacer 41 and the fixture 42 receive the thrust load (a load in an axial direction CL of the shaft 8) acting on the bearings 20 and 21. More specifically, the spacer 41 is in close contact with an inner race of the bearing 20, and the fixture 42 restricts a movement of the bearing 20 in the axial direction CL via the spacer 41.

The rotating cylinder 45 is disposed below the bearing 21 (in other words, the bearing housing 40). The rotating cylinder 45 is in close contact with an inner race of the bearing 21 and restricts a movement of the bearing 21 in the axial direction CL.

A seal member 43 fixed to the shaft 8 is arranged above the fixture 42. The seal member 43 is a member for preventing the lubricating oil disposed in the bearing casing 46 from leaking to the outside. The lubricating oil is a liquid for lubricating and cooling the bearings 20, 21.

The bearing casing 46 includes a side cover 50 which is connected to the pump casing 5 and stores the lubricating oil, a case member 51 which is disposed above the side cover 50 and constitutes an upper end portion of the bearing apparatus 15, and a bearing-support member 52 disposed between the side cover 50 and the case member 51. The bearing-support member 52 is sandwiched between the side cover 50 and the case member 51.

The side cover 50 has a through hole 50a at a center of the side cover 50 through which the shaft 8 penetrates, and two piston rings 55 are arranged between an outer circumferential surface of the shaft 8 and the through hole 50a. Each of the piston rings 55 is mounted on the shaft 8, and is arranged in series in the vertical direction to prevent leakage of lubricating oil to the outside.

The side cover 50 includes an annular inner circumferential wall 56 disposed adjacent to the shaft 8, an annular outer circumferential wall 57 disposed radially outwardly the inner circumferential wall 56, and a bottom wall 58 arranged between the inner circumferential wall 56 and the outer circumferential wall 57. The lubricating oil is held by the inner circumferential wall 56, the outer circumferential wall 57, and the bottom wall 58.

A water cooling jacket 90 is attached to an outer circumferential surface of the bearing casing 46, more specifically, to the outer circumferential wall 57 of the side cover 50 (see FIGS. 1 and 2). The water cooling jacket 90 has a structure in which cooling water circulates, and cools the lubricating oil held in the side cover 50 through the side cover 50.

The bottom wall 58 has a communication hole 59 that communicates with a space between the upper piston ring 55 and the lower piston ring 55. The communication hole 59 is a hole for supplying a shaft sealing gas (for example, an inert gas such as N₂ gas) to the space between the upper piston ring 55 and the lower piston ring 55.

The inner circumferential wall 56 is connected to the through hole 50a, and an upper end of the inner circumferential wall 56 is disposed at a position higher than the liquid level of the lubricating oil held by the side cover 50. With such an arrangement, the leakage of the lubricating oil to the outside due to an overflow of the inner circumferential wall 56 is suppressed.

When the shaft 8 is rotated, the rotating cylinder 45 fixed to the shaft 8 also is rotated together with the shaft 8, and the lubricating oil held by the side cover 50 is scooped above the side cover 50 by the rotating cylinder 45 (see FIG. 3). Hereinafter, a structure of the rotating cylinder 45 will be described with reference to the drawings.

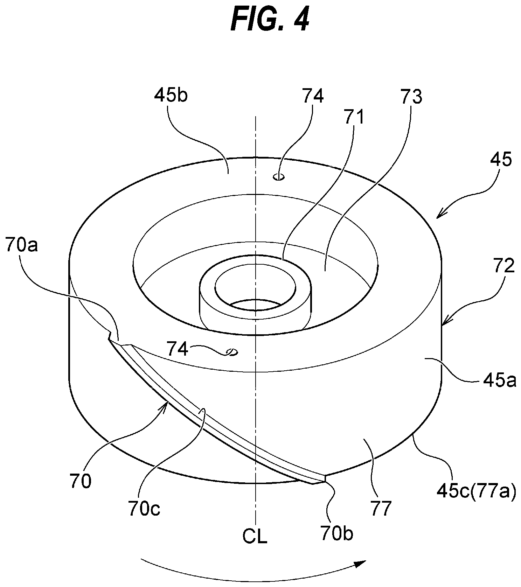

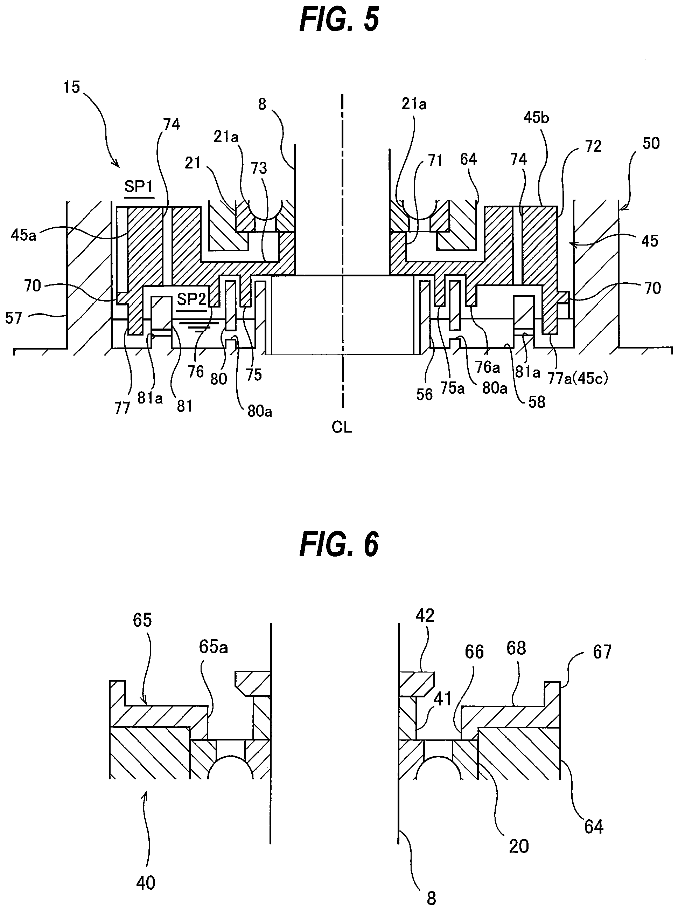

FIG. 4 is a perspective view showing the rotating cylinder 45. FIG. 5 is an enlarged view of the rotating cylinder 45. In FIG. 5, an illustration of the water cooling jacket 90 is omitted. As shown in FIGS. 4 and 5, the rotating cylinder 45 includes two slopes 70 formed on an outer circumferential surface 45a of the rotating cylinder 45. In FIG. 4, only one slope 70 is illustrated.

Two slopes 70 are arranged at equal intervals along a circumferential direction of the rotating cylinder 45. Each of the slopes 70 is disposed in a gap between the outer circumferential surface 45a of the rotating cylinder 45 and an inner surface of the outer circumferential wall 57. In this embodiment, two slopes 70 are provided, however the number of slopes 70 is not limited to this embodiment. In one embodiment, three or more slopes 70 may be provided. Even in this case, the slopes 70 are arranged at equal intervals along the circumferential direction of the rotating cylinder 45.

The rotating cylinder 45 includes an inner cylindrical portion 71 that can be fixed to the shaft 8, an outer cylindrical portion 72 disposed outside the inner cylindrical portion 71, and an annular ring portion 73 that couples the inner cylindrical portion 71 and the outer cylindrical portion 72. The inner cylindrical portion 71 and the outer cylindrical portion 72 are arranged concentrically with the shaft 8.

The inner cylindrical portion 71 is disposed below the bearing 21, and the outer cylindrical portion 72 is disposed radially outwardly the bearing 21. A height of the outer cylindrical portion 72 is higher than a height of the inner cylindrical portion 71. In this embodiment, the inner cylindrical portion 71, the outer cylindrical portion 72, and the annular ring portion 73 are integrally formed members.

The outer circumferential surface 45a of the rotating cylinder 45 corresponds to an outer circumferential surface of the outer cylindrical portion 72. Therefore, the slope 70 may be represented as being provided on the outer circumferential surface of the outer cylindrical portion 72.

In this embodiment, an upper end portion 70a of the slope 70 is connected to an upper end 45b of the rotating cylinder 45, and a lower end portion 70b of the slope 70 is connected to a lower end 45c of the rotating cylinder 45. A scooping surface 70c is formed between the upper end portion 70a and the lower end portion 70b of the slope 70. The slope 70 has a curved shape that extends obliquely downward from the upper end portion 70a (i.e., the upper end 45b) toward the lower end portion 70b (i.e., the lower end 45c) in a rotation direction of the rotating cylinder 45. In other words, the slope 70 is inclined with respect to the axial direction CL.

When the rotating cylinder 45 is rotated with the shaft 8, the slope 70 is rotated around a center of the shaft 8. When the slope 70 is rotated, the scooping surface 70c advances in the rotation direction of the rotating cylinder 45, and scoops up the lubricating oil stored in the side cover 50. The scooped lubricating oil moves obliquely upward in an annular gap between the outer circumferential surface 45a of the rotating cylinder 45 and the outer circumferential wall 57.

As shown in FIG. 2, an upper end of the outer circumferential wall 57 of the side cover 50 is arranged at a position higher than the rotating cylinder 45 fixed to the shaft 8. The bearing-support member 52 extends in a horizontal direction, and is connected to the upper end of the outer circumferential wall 57. The bearing-support member 52 supports the bearing housing 40, and receives a radial load (a load in a direction perpendicular to the axial direction CL of the shaft 8) and a thrust load (a load in a direction parallel to the axial direction CL of the shaft 8) acting on the bearings 20 and 21 via the bearing housing 40.

The bearing-support member 52 has two flow holes 52a through which the lubricating oil scooped up by the slope 70 can pass. Two flow holes 52a are arranged at equal intervals in a circumferential direction of the bearing-support member 52. In this embodiment, two flow holes 52a are provided, however the number of flow holes 52a is not limited to this embodiment.

The case member 51 is connected to the bearing-support member 52. The lubricating oil scooped up by the rotating cylinder 45 reaches the case member 51 through the flow holes 52a of the bearing-support member 52. The lubricating oil that has reached the case member 51 collides with the upper end wall 51a of the case member 51, and a direction of the lubricating oil is changed, and is guided to the bearings 20 and 21.

The upper end wall 51a of the case member 51 is disposed above the rotating cylinder 45 and the bearings 20 and 21, and has a tapered shape for smoothly guiding the lubricating oil to the bearings 20 and 21. More specifically, the upper end wall 51a has a curved portion 60 formed on the inner surface of the upper end wall 51a, and a tapered portion 61 connected to the curved portion 60. The tapered portion 61 is a protrusion extending from the upper end wall 51a toward the bearing housing 40, and is disposed adjacent to the seal member 43.

The tapered portion 61 has a tapered shape in which a sectional area of the tapered portion 61 is gradually decreased from the curved portion 60 toward the bearing housing 40, and a lowermost end of the tapered portion 61 is arranged above the bearing housing 40. The upper end wall 51a can smoothly change the direction of the lubricating oil colliding with the upper end wall 51a and guide the lubricating oil to the bearings 20 and 21 (see FIG. 3).

The bearing housing 40 includes a housing main body 64 and a tray 65 disposed at an upper end of the housing main body 64. FIG. 6 is an enlarged view of the tray 65. The tray 65 guides the lubricating oil to the bearings 20 and 21 while receiving the lubricating oil whose direction has been changed by colliding with the upper end wall 51a. The tray 65 has a through hole 65a formed at a center of the tray 65, an inner annular protrusion 66 connected to the through hole 65a, an outer annular protrusion 67 disposed outside the inner annular protrusion 66, and a connection portion 68 for connecting the inner annular protrusion 66 and the outer annular protrusion 67.

The inner annular protrusion66 and the outer annular protrusion67 are arranged concentrically with the shaft 8. The inner annular protrusion 66 extends downward from the connection portion 68, i.e., toward the bearing 20, and the outer annular protrusion 67 extends upward from the connection portion 68, i.e., toward the upper end wall 51a.

The inner annular protrusion 66 is in close contact with an outer race of the bearing 20, and restricts a movement of the bearing 20 in the axial direction CL. The housing main body 64 of the bearing housing 40 is in close contact with an outer race of the bearing 21, and restricts a movement of the bearing 21 in the axial direction CL (see FIG. 2).

As described above, the bearings 20 and 21 are fixed-side bearings in which the movement of the bearings 20 and 21 in the axial direction CL is restricted by the fixture 42, the bearing housing 40, and the rotating cylinder 45. The bearing 13 disposed on the opposite side of the bearings 20 and 21 across the pump rotors 6a to 6d is a free-side bearing that can move in the axial direction CL. The bearings 20 and 21 as the fixed-side bearings are arranged above the pump rotors 6a to 6d, and the bearing 13 as a free-side bearing is arranged below the pump rotors 6a to 6d.

The outer annular protrusion 67 is disposed at a position further away from the shaft 8 than the tapered portion 61 of the upper end wall 51a (see FIG. 2). Therefore, the outer annular protrusion 67 can prevent the lubricating oil dropped from the tapered portion 61 onto the tray 65 from flowing outside the tray 65. The lubricating oil dropped onto the tray 65 contacts the bearings 20, 21 through the gap between the through hole 65a and the spacer 41, and as a result, lubricates and cools the bearings 20, 21.

The lubricating oil that has contacted the bearings 20 and 21 passes through the bearings 20 and 21 and falls on the rotating cylinder 45 (see FIG. 3). More specifically, the lubricating oil is held by the inner cylindrical portion 71, the outer cylindrical portion 72, and the annular ring portion 73.

Centrifugal force due to the rotation of the rotating cylinder 45 acts on the lubricating oil held by the rotating cylinder 45. The lubricating oil passes through a gap between the housing main body 64 and the outer cylindrical portion 72 to flow into the annular gap between the outer circumferential surface 45a of the rotating cylinder 45 and the outer circumferential wall 57. Thereafter, the lubricating oil is again scooped up by the slope 70.

In this manner, the bearing apparatus 15 can form a circulating flow of the lubricating oil (i.e., an upward flow and a downward flow of the lubricating oil) inside the bearing apparatus 15. The circulating lubricating oil can contact the bearings 20 and 21 to lubricate and cool the bearings 20 and 21. As a result, each of the bearings 20 and 21 can sufficiently exhibit its function.

As shown in FIGS. 2 and 5, the rotating cylinder 45 is arranged so as to surround a part of the bearing 21. The upper end of the outer cylindrical portion 72 is arranged at a position higher than a lower end of a roller 21a of the bearing 21. The upper end of the outer cylindrical portion 72 is preferably arranged at the same position as the center of the roller 21a. With such a structure, when the operation of the vacuum pump apparatus 1 is stopped, the rollers 21a of the bearing 21 always contact the lubricating oil held by the rotating cylinder 45. Therefore, the vacuum pump apparatus 1 can restart the operation of the vacuum pump apparatus 1 without bringing the bearing 21 into an unlubricated state.

The effect of the bearing apparatus 15 having the structure for forming the circulating flow of the lubricating oil will be described. A configuration is conceivable in which a vacuum pump apparatus is operated while a bearing is always immersed in lubricating oil. However, in such a configuration, during operation of the vacuum pump apparatus, the bearing is rotated in the lubricating oil, so that a temperature increase of the bearing due to a stirring heat of the lubricating oil is large, and the bearing may be damaged. Therefore, it is not desirable to employ the vacuum pump apparatus 1 which is rotated at a high speed (for example, 4000 min⁻¹).

According to this embodiment, the bearing apparatus 15 is configured to circulate the lubricating oil by the slope 70. Therefore, the bearings 20 and 21 are lubricated and cooled by the lubricating oil without being affected by the stirring heat of the lubricating oil. As a result, each of the bearings 20 and 21 can sufficiently exhibit its function.

According to this embodiment, the vacuum pump apparatus 1 includes the bearing apparatus 15 which can bring the lubricating oil into reliable contact with the bearings 20, 21 and sufficiently exhibit the functions of the bearings 20, 21. Therefore, the vacuum pump apparatus 1 arranged vertically can be operated without any problem. As a result, an installation space of the vacuum pump apparatus 1 can be reduced, and the vacuum pump apparatus 1 can be operated at a high pumping speed.

Since the vacuum pump apparatus 1 is arranged vertically, gravity acts on the lubricating oil in the bearing apparatus 15. Further, when a gas flow rate flowing from a process chamber side changes or stops during operation of the vacuum pump apparatus 1, a pressure in a pump chamber also changes, so that a pressure difference is generated between the pressure in the pump chamber and a pressure in a bearing chamber. Therefore, the gas moves from a high pressure side to a low pressure side between two pressures. In particular, when a gas inflow from the process chamber side stops at once in a state in which a large flow rate of the gas is exhausted and the pressure in the pump chamber and the pressure in the bearing chamber are high, the pressure of the pump chamber drops at once, and a large pressure difference between the pump chamber side and the bearing chamber side. Therefore, a large amount of gas flows from the bearing chamber side to the pump chamber side, and the lubricating oil (mist lubricating oil and liquid lubricating oil) may leak outside (pump chamber side) along with this flow.

When the lubricating oil leaks, the amount of lubricating oil in the bearing apparatus 15 is decreased, and the amount of lubricating oil supplied to the bearings 20 and 21 is decreased. Not only may the bearing be damaged, but also the leaked lubricating oil may flow back to the process chamber side via the pump chamber, causing wafer contamination. Therefore, the bearing apparatus 15 has a structure capable of reliably preventing the leakage of the lubricating oil.

As shown in FIG. 5, the rotating cylinder 45 includes a plurality of downward ribs 75, 76, 77 extending from the lower surface of the rotating cylinder 45 to the bottom wall 58 (i.e., below) of the side cover 50. Each of these downward ribs 75, 76, 77 has a cylindrical shape and is arranged concentrically with the shaft 8. Hereinafter, in this specification, the downward rib 75 may be referred to as an inner downward rib 75, the downward rib 76 may be referred to as an intermediate downward rib 76, and the downward rib 77 may be referred to as an outer downward rib 77.

The inner downward rib 75 and the intermediate downward rib 76 extend downward from a lower surface of the annular ring portion 73, and the outer downward rib 77 extends downward from a lower surface of the outer cylindrical portion 72.

The side cover 50 includes a plurality of upward ribs 80 and 81 extending from the bottom wall 58 of the side cover 50 toward the lower surface (i.e., above) of the rotating cylinder 45. Each of the upward ribs 80 and 81 has a cylindrical shape, and is arranged concentrically with the shaft 8. Hereinafter, in this specification, the upward rib 80 may be referred to as an inner upward rib 80, and the upward rib 81 may be referred to as an outer upward rib 81.

The inner upward rib 80 has passage portions (i.e., oil passage portions) 80a that allow the passage of the lubricating oil. In this example, two passage portions 80a are provided, however the number of passage portions 80a is not limited thereto. The outer upward rib 81 also has passage portions (i.e., oil passage portions) 81a that allow the passage of the lubricating oil. In this example, two passage portions 81a are provided, however the number of passage portions 81a is not limited thereto. The lubricating oil can pass through the passage portions 80a and the passage portions 81a. The passage portion 80a is a hole for making a liquid level of the lubricating oil existing between the inner circumferential wall 56 and the inner upward rib 80 equal to a liquid level of the lubricating oil existing between the inner upward rib 80 and the outer upward rib 81. The passage portion 81a is a hole for making a liquid level of the lubricating oil existing between the inner upward rib 80 and the outer upward rib 81 equal to a liquid level of the lubricating oil existing between the outer upward rib 81 and the outer downward rib 77 of the rotating cylinder 45.

The passage portion 80a is a return flow path for returning the lubricating oil that has passed through a gap between the inner upward rib 80 and the inner downward rib 75 to a space between the inner upward rib 80 and the outer upward rib 81. In one example, the passage portion 80a may be a hole formed at a lower portion of the inner upward rib 80. In another example, the passage portion 80a may be a cutout formed at a lower end of the inward upward rib 80. The passage portion 81a a return flow path for returning the lubricating oil to a space between the outer circumferential surface 45a of the rotating cylinder 45 and an inner surface of the bearing casing 46 in order to lubricate the bearings 20 and 21 with the lubricating oil that has passed through a pressure adjustment hole 74 described later and the lubricating oil that has returned from the passage portion 80a. In one example, the passage portion 81a may be a hole formed below the outer upward rib 81. In another example, the passage portion 81a may be a cutout formed at a lower end of the outer upward rib 81.

In this example, the outer downward rib 77 extends below the inner downward rib 75 and the intermediate downward rib 76. A lower end 75a of the inner downward rib 75 and a lower end 76a of the intermediate downward rib 76 are arranged at the same height. The lower end 75a of the inner downward rib 75 and the lower end 76a of the intermediate downward rib 76 are arranged above the lubricating oil held by the side cover 50, and a lower end 77a of the outer downward rib 77 is immersed in the lubrication oil held by the side cover 50. A lower end 45c of the rotating cylinder 45 corresponds to the lower end 77a of the outer downward rib 77.

The rotating cylinder 45 has the pressure adjustment hole 74 formed in the outer cylindrical portion 72. The pressure adjustment hole 74 extends in the vertical direction. In this example, two pressure adjustment holes 74 are provided, however the number of pressure adjustment holes 74 is not limited to this example. In one example, one pressure adjustment hole 74 may be provided.

As described above, the lower end 77a of the outer downward rib 77 is immersed in the lubricating oil. Therefore, in a case where the pressure adjustment hole 74 is not provided, the passage of the gas is shut off by the lubricating oil between a space (first space SP1) above the rotating cylinder 45 and a space below the rotating cylinder 45, in other words, a space (second space SP2) surrounded by the outer downward rib 77. Therefore, for example, when the vacuum pump apparatus 1 is stopped, the first space SP1 and the second space SP2 are at the atmospheric pressure. However, when the vacuum pump apparatus 1 is started, the pressure in the pump chamber side is decreased, and the pressure in the second space SP2 is decreased. While the pressure in the first space SP1 remains at the atmospheric pressure, so that a pressure difference is generated between two spaces. As a result, the gas in the first space SP1 expands and presses the liquid level of the lubricating oil between the outer circumferential surface 45a of the rotating cylinder 45 and the inner surface of the bearing casing 46 to increase the liquid level of the lubricating oil in the second space SP2. Therefore, the lubricating oil may flow over the inner circumferential wall 56. In this example, the pressure adjustment hole 74 can communicate the first space SP1 and the second space SP2. The pressure in the first space SP1 and the pressure in the second space SP2 are always the same. Therefore, an increase of the liquid level of the lubricating oil inside the outer downward rib 77 is prevented.

The inner downward rib 75 is disposed radially outwardly the inner circumferential wall 56. The inner upward rib 80 is disposed radially outwardly the inner downward rib 75. The intermediate downward rib 76 is disposed radially outwardly the inner upward rib 80. The outer upward rib 81 is disposed radially outwardly the intermediate downward rib 76. The outer downward rib 77 is disposed radially outwardly the outer upward rib 81.

In this manner, the downward ribs 75, 76, 77 and the upward ribs 80, 81 are alternately arranged and have a labyrinth structure. More specifically, the inner downward rib 75, the inner upward rib 80, the intermediate downward rib 76, the outer upward rib 81, and the outer downward rib 77 are arranged from the inner circumferential wall 56 to the outer circumferential wall 57 in this order.

When the pressure difference (the space pressure in the bearing casing 46 is higher than the space pressure in the pump casing 5) is generated between the space in the bearing casing 46 and the space in the pump casing 5 immediately after the vacuum pump apparatus 1 discharges a process gas, the gas in the space inside the bearing casing 46 zigzags through the labyrinth structure toward the pump casing 5. The lubricating oil (mist lubricating oil and liquid lubricating oil) moving along with the gas flow is shaken off of the gas flow due to its own weight by a zigzag path formed between the downward ribs 75, 76, 77 and the upward ribs 80, 81. As a result, the progress of the lubricating oil to the pump casing 5 is blocked. Therefore, the bearing apparatus 15 can reliably prevent the lubricating oil from leaking to the pump casing 5.

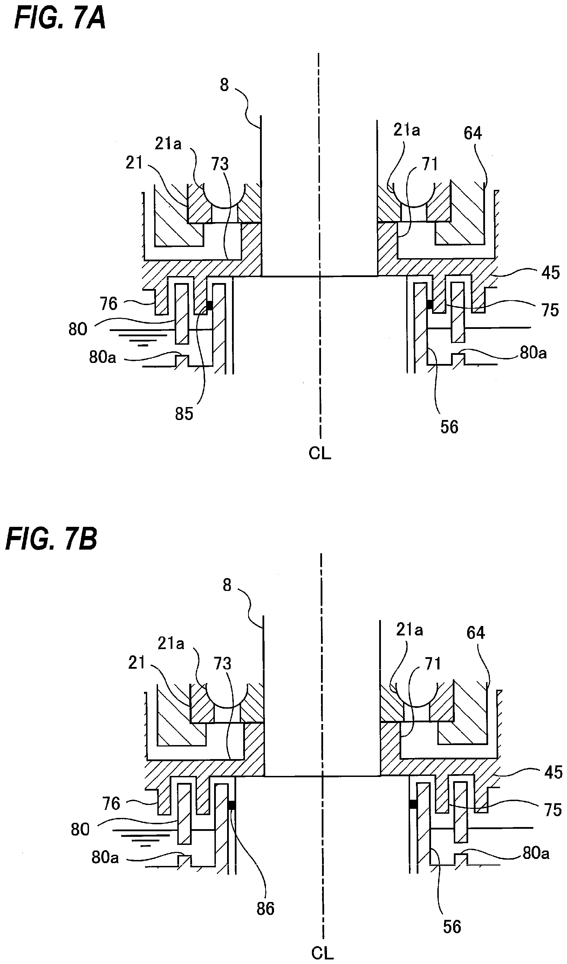

FIGS. 7A and 7B are views showing a contact seal. As shown in FIG. 7A, in order to more reliably prevent the leakage of the lubricating oil, a contact seal (first contact seal) 85 may be arranged between the inner downward rib 75 of the rotating cylinder 45 and the inner circumferential wall 56 of the side cover 50. As shown in FIG. 7B, a contact seal (second contact seal) 86 may be arranged between the shaft 8 and the inner circumferential wall 56 of the side cover 50. Although not shown in the drawing, the bearing apparatus 15 may include both the contact seals 85 and 86. Known contact seals can be employed as the contact seals 85 and 86.

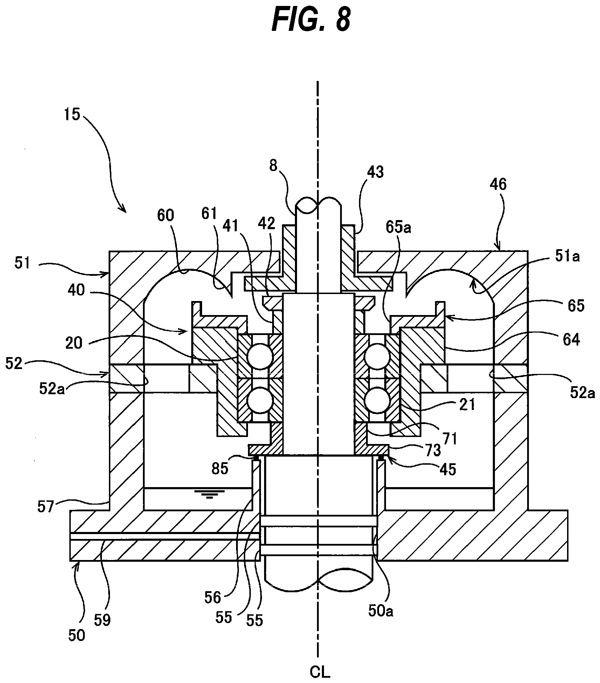

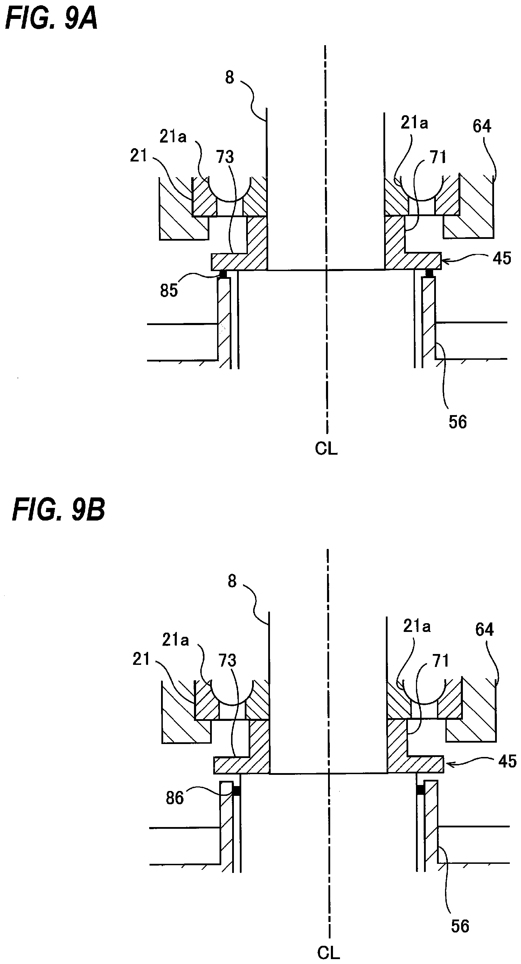

FIG. 8 is a sectional view showing another bearing apparatus 15. FIGS. 9A and 9B are views showing a contact seal applied to the bearing apparatus 15. Structures, which will not be described particularly here, are identical to those of the above-described embodiment, and repetitive descriptions thereof are omitted.

The bearing apparatus 15 includes the bearings 20 and 21 for supporting the shaft 8 which extends in the vertical direction, the bearing housing 40 for housing the bearings 20 and 21, the rotating cylinder 45 which is disposed below the bearing housing 40 and can be fixed to the shaft 8, a bearing casing 46 for housing the bearings 20, 21, the bearing housing 40, and the rotating cylinder 45, and at least one of the contact seal (first contact seal) 85 and the contact seal (second contact seal) 86. The contact seal 85 is disposed between the rotating cylinder 45 and the bearing casing 46. The contact seal 86 is disposed between the bearing casing 46 and the shaft 8.

As shown in FIG. 8, the rotating cylinder 45 includes the inner cylindrical portion 71 and the annular ring portion 73, however does not include the outer cylindrical portion 72 and the slope 70. Further, the bearing apparatus 15 does not include the downward ribs 75, 76, 77 and the upward ribs 80, 81 that constitute the labyrinth structure.

The inner cylindrical portion 71 extends parallel to the axial direction CL of the shaft 8. The annular ring portion 73 extends radially outwardly the inner cylindrical portion 71 and projects from the inner cylindrical portion 71. The annular ring portion 73 projects above the inner circumferential wall 56 of the side cover 50, and the contact seal 85 is disposed in the gap between the annular ring portion 73 and the inner circumferential wall 56 (see FIGS. 8 and 9A). With such an arrangement, the contact seal 85 can prevent the lubricant oil from leaking below the bearing apparatus 15.

As shown in FIG. 9B, the contact seal 86 may be disposed between the shaft 8 and the inner circumferential wall 56 of the side cover 50. Although not shown in drawing, the bearing apparatus 15 may include both the contact seals 85 and 86.

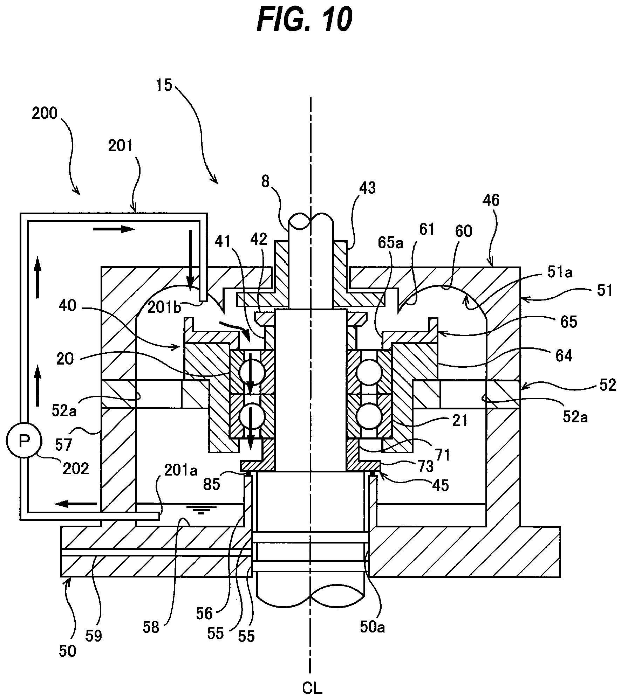

FIG. 10 is a sectional view showing still another bearing apparatus 15. Structures, which will not be described particularly here, are identical to those as described above, and repetitive descriptions thereof are omitted. As shown in FIG. 10, the bearing apparatus 15 includes a lubricating-oil-supply structure 200 for supplying the lubricating oil stored in the bearing casing 46 to the bearings 20 and 21.

As shown in FIG. 10, the lubricating-oil-supply structure 200 includes a transfer pipe 201 for transferring the lubricating oil stored in the bearing casing 46 to the bearings 20 and 21, and a transfer pump 202 connected to the transfer pipe 201.

One end 201a of the transfer pipe 201 is connected to a lower portion of the bearing casing 46, and the other end 201b of the transfer pipe 201 is connected to an upper portion of the bearing casing 46. One end 201a of the transfer pipe 201 may be connected to the bottom wall 58 of the bearing casing 46. The other end 201b of the transfer pipe 201 is connected to the upper end wall 51a of the case member 51, and the tray 65 is disposed below the other end 201b. In one example, the transfer pipe 201 may be connected to the bearing casing 46 such that the other end 201b is disposed above the bearing 20.

When the transfer pump 202 is driven, the lubricating oil is sucked from one end 201a of the transfer pipe 201 and discharged above the bearing 20 through the other end 201b. The transfer pump 202 is disposed outside the bearing apparatus 15, and atmospheric pressure air exists in a space where the transfer pump 202 is disposed. Therefore, atmospheric pressure air may flow into the transfer pump 202, and as a result, atmospheric pressure air may flow into an internal space of the bearing casing 46 through the transfer pipe 201.

Therefore, the transfer pump 202 has preferably a structure with a high sealing structure for preventing inflow of air into an external space. In one example, the transfer pipe 201 and the transfer pump 202 may be arranged in the internal space of the bearing casing 46 depending on the structure of the bearing casing 46.

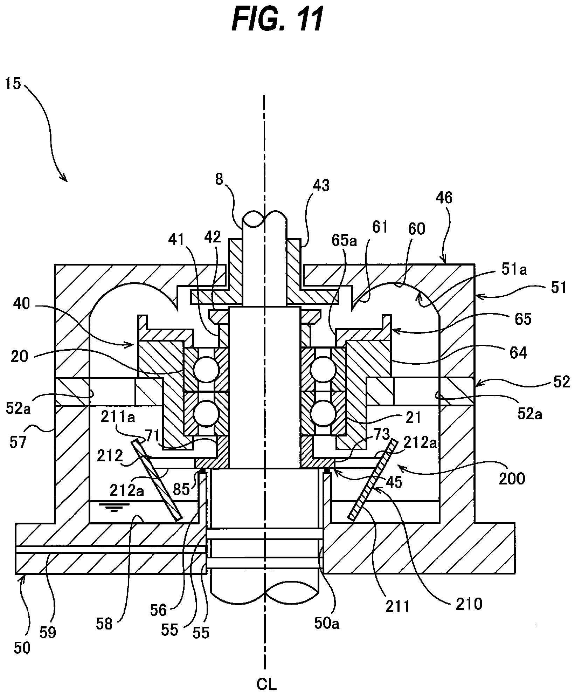

FIG. 11 is a view showing another lubricating-oil-supply structure 200. As shown in FIG. 11, the lubricating-oil-supply structure 200 includes a lubricating-oil-scooping member 210 for scooping the lubricating oil stored in the bearing casing 46 and moving the scooped lubricating oil to the bearings 20 and 21.

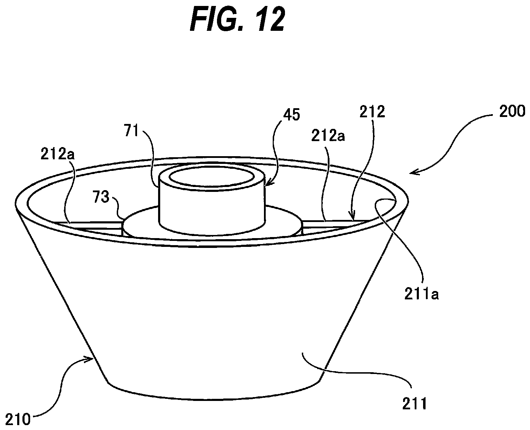

FIG. 12 is a perspective view showing the lubricating-oil-scooping member 210. As shown in FIG. 12, the lubricating-oil-scooping member 210 includes an annular tapered guide 211 surrounding the rotating cylinder 45 and a coupling supporter 212 for coupling the rotating cylinder 45 and the tapered guide 211. As shown in FIGS. 11 and 12, the tapered guide 211 and the coupling supporter 212 are formed of members different from the rotating cylinder 45. In one example, the tapered guide 211 and the coupling supporter 212 may be integrally formed with the rotating cylinder 45.

The tapered guide 211 is disposed above the bottom wall 58 of the bearing casing 46. A gap is formed between the tapered guide 211 and the bottom wall 58. The tapered guide 211 has a tapered shape such that an inner diameter of the tapered guide 211 is gradually increased as the distance from the bottom wall 58 is increased.

The coupling supporter 212 is configured to couple the rotating cylinder 45 and the tapered guide 211. As shown in FIG. 12, the coupling supporter 212 includes a plurality (four in FIG. 12) of coupling bodies 212a. These coupling bodies 212a are arranged at equal intervals along a circumferential direction of the tapered guide 211. Each of coupling bodies 212a protrudes outward from the annular ring portion 73 of the rotating cylinder 45, and is fixed to an upper portion of the tapered guide 211. Therefore, when the rotating cylinder 45 is rotated, the tapered guide 211 also is rotated together with the rotating cylinder 45.

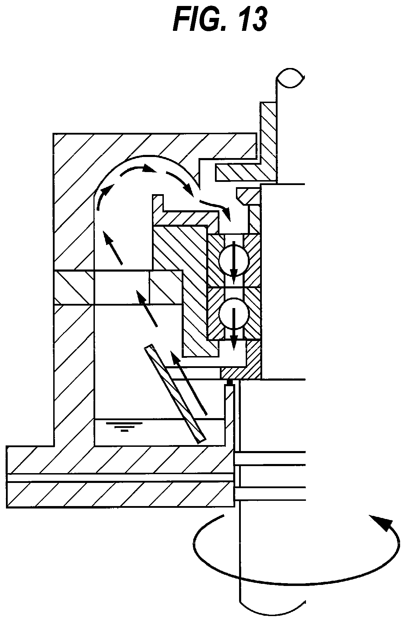

FIG. 13 is a view showing the lubricating oil circulating inside the bearing apparatus 15. In FIG. 13, reference numerals are omitted for the purpose of making it easier to view the drawing. In FIG. 13, the flow of the lubricating oil is represented by arrows. As shown in FIG. 13, when the tapered guide 211 is rotated, the lubricating oil existing between the tapered guide 211 and the inner circumferential wall 56 moves obliquely upward along the inner surface 211a (see FIG. 11) of the tapered guide 211. In this manner, the lubricating oil is scooped up to the upper portion of the bearing casing 46. Thereafter, the lubricating oil collides with the upper end wall 51a, the direction of the lubricating oil is changed, and the lubricating oil is guided to the bearings 20, 21. In one example, a groove (for example, a spiral groove) for assisting the movement of the lubricating oil may be formed on the inner surface 211a of the tapered guide 211.

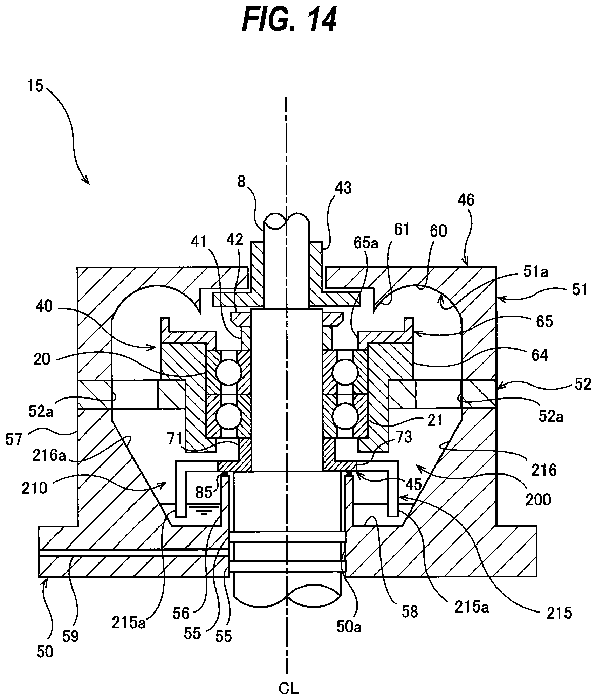

FIG. 14 is a view showing another lubricating-oil-scooping member 210. As shown in FIG. 14, the lubricating-oil-scooping member 210 includes a scooping arm 215 connected to the rotating cylinder 45 and a movement guide 216 surrounding the scooping arm 215.

As shown in FIG. 14, the scooping arm 215 includes a plurality of arm bodies 215a connected to the annular ring portion 73 of the rotating cylinder 45As shown in FIG. 14, two arm bodies 215a are illustrated. The number of arm bodies 215a is not limited to the example shown in FIG. 14. In a case where the arm members 215a are provided, the arm members 215a are arranged at equal intervals along the circumferential direction of the annular ring portion 73.

Each of arm bodies 215a protrudes outward from the annular ring portion 73 of the rotating cylinder 45, and is bent toward the bottom wall 58 in the middle of the arm body 215a. Therefore, the lower portion of the arm body 215a is in contact with the lubricating oil.

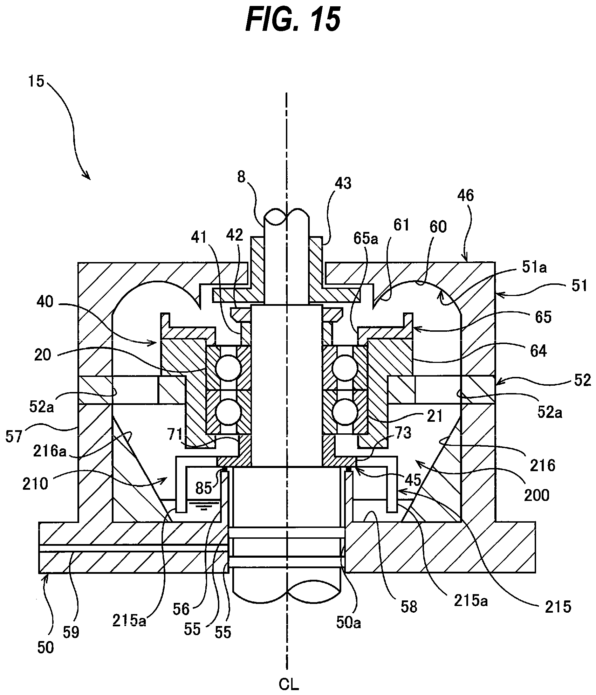

The movement guide 216 is arranged outside the scooping arm 215. In the example shown in FIG. 14, the movement guide 216 is a member integrally formed with the side cover 50 of the bearing casing 46. In one example, the movement guide 216 may be formed of a member different from the side cover 50 (see FIG. 15). FIG. 15 is a view showing another movement guide 216.

As shown in FIGS. 14 and 15, the movement guide 216 has a tapered shape in which a cross-sectional area of the movement guide 216 is gradually increased from the upper portion toward the lower portion of the bearing casing 46. In other words, in the bearing casing 46 provided with the movement guide 216, the internal space of the bearing casing 46 becomes smaller from the upper portion to the lower portion of the bearing casing 46.

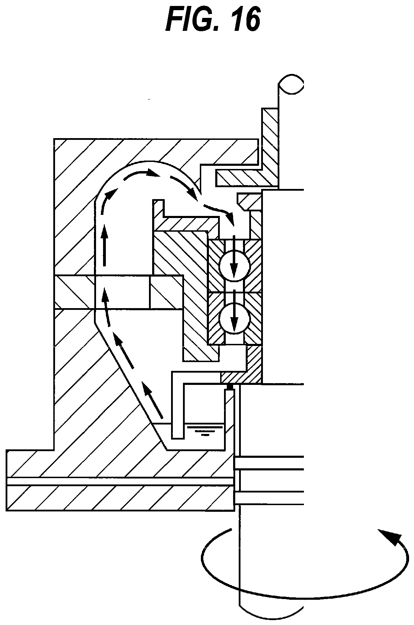

FIG. 16 is a view showing the lubricating oil circulating inside the bearing apparatus 15. In FIG. 16, reference numerals are omitted for the purpose of making it easier to view the drawing. In FIG. 16, the flow of the lubricating oil is represented by arrows.

As shown in FIG. 16, when the rotating cylinder 45 is rotated, the scooping arm 215 is rotated together with the rotating cylinder 45. When the scooping arm 215 is rotated, the centrifugal force due to the rotation of the scooping arm 215 acts on the lubricating oil, and the lubricating oil is repelled to the outside of the scooping arm 215.

The movement guide 216 is disposed outside the scooping arm 215. Therefore, the lubricating oil repelled by the scooping arm 215 moves obliquely upward along the inner surface 216a (see FIGS. 14 and 15) of the movement guide 216, and moves to the upper portion of the bearing casing 46. Thereafter, the lubricating oil collides with the upper end wall 51a, the direction of the lubricating oil is changed, and the lubricating oil is guided to the bearings 20, 21. A groove (for example, a spiral groove) for assisting the movement of the lubricating oil may be formed on the inner surface 216a of the movement guide 216.

Various examples of the lubricating-oil-supply structure 200 have been described. However, the examples shown in FIG. 10, FIG. 11, and FIG. 14 may be combined wherever possible.

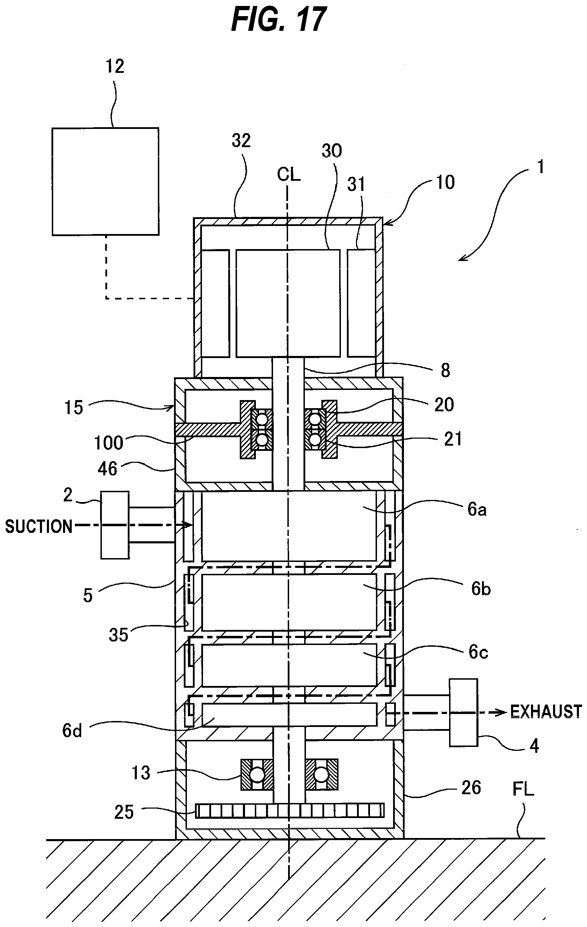

FIG. 17 is a view showing another vacuum pump apparatus 1. Structures, which will not be described particularly in this unclaimed example, are identical to those of the above-described embodiment, and repetitive descriptions thereof are omitted.

As shown in FIG. 17, the bearings 20 and 21 are supported by a bearing-support member 100 for supporting the bearings 20 and 21. As shown in FIG. 17, the bearing-support member 100 supports the bearings 20, 21 so as to limit the movement of the bearings 20, 21 in the axial direction CL. Therefore, also as shown in FIG. 17, the bearings 20 and 21 are fixed-side bearings. The bearing 13 disposed on the opposite side of the bearings 20 and 21 across the pump rotors 6a to 6d is a free-side bearing. The vacuum pump apparatus 1 as shown in FIG. 17 may include a bearing apparatus 15 having the configuration shown in FIGS. 1 to 16.

As shown in FIG. 17, the bearings 20 and 21, which are the fixed-side bearings, are provided above the pump rotors 6a to 6d (more specifically, the uppermost pump rotor 6a of the pump rotors 6a to 6d). As shown in FIG. 17, the bearing 13 which is the free-side bearing is arranged below the bearings 20 and 21 which are the fixed-side bearings, more specifically, below the pump rotors 6a to 6d. The bearing 13 may be arranged above the pump rotors 6a to 6d. The bearing 13 may be arranged inside the bearing apparatus 15. In The timing gear 25 may be arranged above the pump rotors 6a to 6d.

The timing gear 25, the bearing 13, the pump rotors 6a to 6d, the bearing apparatus 15, and the motor 10 are arranged vertically in series along the axial direction CL of the shaft 8. As shown in FIG. 17, the pump rotors 6a to 6d are the roots rotors or the claw rotors. Therefore, the vacuum pump apparatus 1 is a roots-type pump apparatus having a roots-type exhaust system or a claw-type pump apparatus having a claw-type exhaust system. Further, a combined pump apparatus in which at least one stage of the pump rotor is a roots rotor or a claw rotor may be used. Although not shown in the drawing, a heater for increasing the temperature of the pump casing 5 may be attached to the pump casing 5.

As shown in FIG. 17, the motor 10 is arranged above the bearing apparatus 15 (more specifically, the bearings 20, 21). With such an arrangement, a position of the center of gravity of the pump rotors 6a to 6d and the pump casing 5, which are heavy components of the components of the vacuum pump apparatus 1, can be lowered. Therefore, an installation stability of the vacuum pump apparatus 1 during moving and operating of the vacuum pump apparatus 1 can be improved, and the vacuum pump apparatus 1 can be prevented from falling.

In a case where the roots type or the claw type is adopted as the exhaust method, a gap between the pump casing 5 and each of the pump rotors 6a to 6d in a direction perpendicular to the axial direction CL of the shaft 8 is extremely small. By forming such a small gap, a backflow of the process gas to be discharged is suppressed, and an exhaust performance of the vacuum pump apparatus 1 can be maintained. Hereinafter, this gap may be referred to as a lateral gap.

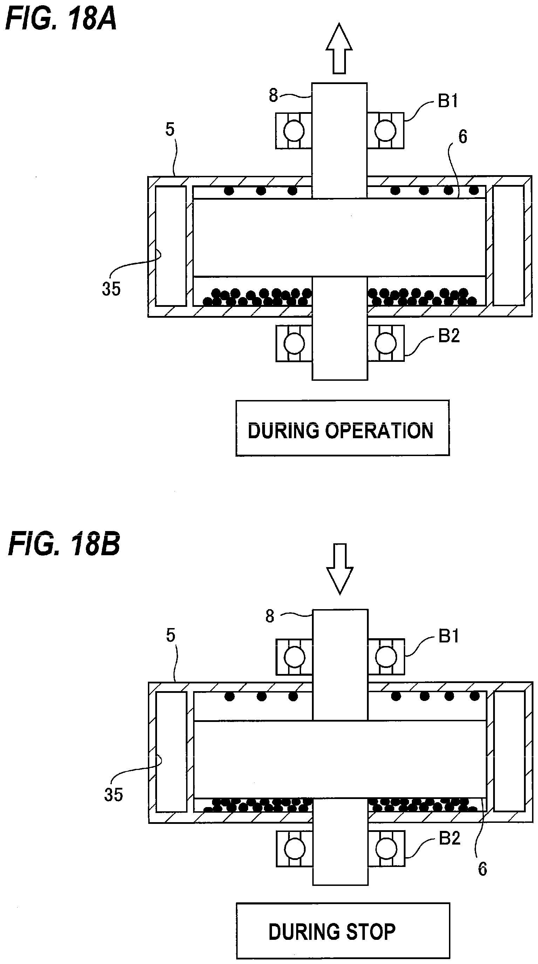

FIGS. 18A and 18B are views for explaining a problem that may occur in a vacuum pump apparatus arranged vertically. In FIGS. 18A and 18B, the pump rotor 6 and the pump casing 5 are illustrated, and the lateral gap between the pump rotor 6 and the pump casing 5 is exaggerated. Further, the free-side bearing B1 is arranged above the pump rotor 6, and the fixed-side bearing B2 is arranged below the pump rotor 6. The vacuum pump apparatus in FIGS. 18A and 18B is an apparatus for explaining the above problem, and has a different configuration from the vacuum pump apparatus 1 according to this embodiment.

During operation of the vacuum pump apparatus, the shaft 8 expands upward with respect to the fixed-side bearing B2 due to a temperature increase of the shaft 8. However, since the temperature of the pump rotor 6 becomes higher than the temperature of the pump casing 5, regarding the lateral gap between the pump rotor 6 fixed to the shaft 8 and the pump casing 5, a lower gap is widened and an upper gap is narrowed. When the process gas is exhausted in this state, the exhaust gas is solidified due to its sublimability depending on the exhaust gas, so that solid matters (see black circles in FIGS. 18A and 18B) adhere and deposit in the lateral gap. More solid matters deposit in the lateral gap between the lower surface of the pump rotor 6 and the pump casing 5 due to its own weight.

In a state in which the solid matters are deposited, as shown in FIG. 18B, when the operation of the vacuum pump apparatus is stopped for maintenance of the vacuum pump apparatus or maintenance of an exhaust gas treatment apparatus on a downstream side of the vacuum pump apparatus, the shaft 8 contracts downward with respect to the fixed-side bearing B2 due to a temperature decrease of the shaft 8. As a result, the lateral gap between the lower surface of the pump rotor 6 fixed to the shaft 8 and the pump casing 5 is small. Therefore, the pump rotor 6 compresses a large amount of solid matters deposited in the lateral gap between the lower surface of the pump rotor 6 and the pump casing 5.

In this manner, the solid matters crushed by the pump rotor 6 disturb the rotation of the pump rotor 6, increase a load resistance of the motor, and in the worst case, the vacuum pump apparatus may not be able to restart.

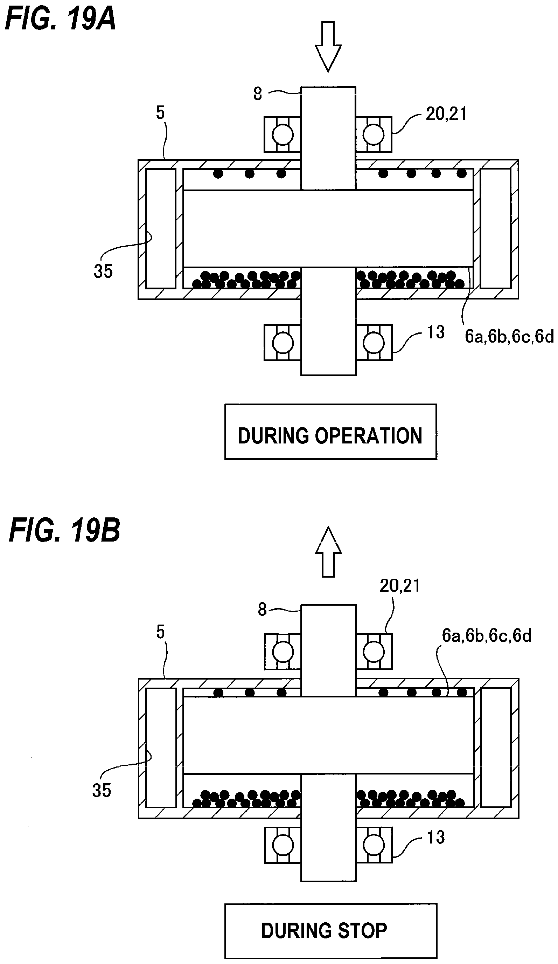

FIGS. 19A and 19B are views for explaining an effect of the vacuum pump apparatus 1 as shown in FIG. 17. By disposing the bearings 20 and 21 above the pump rotor 6a, when the operation of the vacuum pump apparatus 1 is stopped, the shaft 8 contracts upward with respect to the bearings 20 and 21 which are the fixed-side bearings due to the temperature decrease of the shaft 8 (see FIG. 19B). As a result, the lateral gap between the lower surface of each of the pump rotors 6a to 6d fixed to the shaft 8 and the pump casing 5 is increased. Therefore, the compression of the solid matters deposited in the lateral gap between the lower surface of each of the pump rotors 6a to 6d and the pump casing 5 by each of the pump rotors 6a to 6d is prevented. As a result, the restart of the vacuum pump apparatus 1 is not disturbed.

When the shaft 8 contracts upward, the lateral gap between the upper surface of each of the pump rotors 6a to 6d fixed to the shaft 8 and the pump casing 5 is decreased. However, since the amount of solid matters deposited in the lateral gap is small, the increase in the load resistance of the motor is very small. Therefore, the restart of the vacuum pump apparatus 1 is hardly disturbed. In the embodiment shown in FIG. 1 as well, the bearings 20, 21 as fixed-side bearings are arranged above the pump rotors 6a to 6d. The vacuum pump apparatus 1 according to the embodiment shown in FIG. 1 can achieve the same effects as the above effects.

In order to reliably prevent the increase in the load resistance of the motor, the operation controller 12 may perform a repeat operation of the rotation and the stop of the pump rotors 6a to 6d by repeatedly driving and stopping of the motor 10 before completely stopping the operation of the vacuum pump apparatus 1.

The operation controller 12 has a built-in operation stop control function of the vacuum pump apparatus 1, and stores an operation stop control pattern (i.e., a timing pattern for controlling the operation and the stop of the vacuum pump apparatus 1) for repeating an operation start and an operation stop of the vacuum pump apparatus 1 over time. Therefore, when an operation stop motion of the vacuum pump apparatus 1 is started by operating of the operation stop control function, the operation stop control pattern is performed. More specifically, the start and stop of the motor 10 are repeated at predetermined time intervals.

When the vacuum pump apparatus 1 is stopped, the temperature of the vacuum pump apparatus 1 is decreased. The shaft 8 also contracts upward, and the solid matters deposited in the lateral gap between the upper surface of each of the pump rotors 6a to 6d and the pump casing 5 are gradually compressed. However, the motor 10 is driven by the operation stop control function before a compression force is increased (so that the motor 10 cannot be driven), and each of the pump rotors 6a to 6d is rotated. Therefore, the solid matters that have been in contact with each of the pump rotors 6a to 6d are repelled outward by the centrifugal force of the rotation the each of the pump rotors 6a to 6d, and thus the solid matters are removed from the lateral gap between each of the pump rotors 6a to 6d and the pump casing 5. Further, the increase in the load resistance of the motor 10 can be reliably prevented by repeatedly performing a starting and stopping operation. This operation is as follows: the vacuum pump apparatus 1 is stopped before the temperature of the vacuum pump apparatus 1 is increased by the operation and the shaft 8 extends downward, and the operation starts again when the upper surface of each of the pump rotors 6a to 6d begins to compress the solid matters by contracting again the shaft 8.

As described above, the compression of the solid matters by each of the pump rotors 6a to 6d due to the contraction of the shaft 8 depends on the temperature decrease of the vacuum pump apparatus 1. Therefore, in one embodiment, the vacuum pump apparatus 1 may include a temperature sensor (not shown) attached to an outer surface of the pump casing 5. This temperature sensor is electrically connected to the operation controller 12. The operation controller 12 repeats starting and stopping of the motor 10 based on a temperature change of the pump casing 5 measured by the temperature sensor. Even with such a configuration, the vacuum pump apparatus 1 can prevent the load resistance of the motor 10 from increasing due to the contraction of the shaft 8.

In the above-described embodiment, a multi-stage vacuum pump apparatus including a multi-stage pump rotor has been described. However, the present invention is not limited to this example, and a single-stage vacuum pump apparatus including a single-stage pump rotor may be employed.

Although certain preferred embodiments of the present invention have been shown and described in detail, it should be understood that various changes and modifications may be made therein without departing from the scope of the appended claims.

## Claims

1. A bearing apparatus (15) comprising:
a bearing (20, 21) configured to support a shaft (8) extending in a vertical direction;
a bearing housing (40) configured to house the bearing (20, 21);
a rotating cylinder (45) disposed below the bearing housing (40) and fixed to the shaft (8), the rotating cylinder (45) comprising a slope (70) formed on an outer circumferential surface (45a) of the rotating cylinder (45); and
a bearing casing (46) housing the bearing (20, 21), the bearing housing (40), and the rotating cylinder (45); **characterized in that**
the rotating cylinder (45) comprises an outer cylindrical portion (72) disposed radially outwardly the bearing (20, 21), and
an upper end of the outer cylindrical portion (72) is arranged at a position higher than a lower end of a roller (21a) of the bearing (20, 21).

2. The bearing apparatus (15) according to claim 1, wherein the slope (70) is disposed in a gap between an outer circumferential surface (45a) of the rotating cylinder (45) and an inner surface of the bearing casing (46).

3. The bearing apparatus (15) according to claim 1 or 2, wherein the slope (70) extends obliquely downward from an upper end of the rotating cylinder (45) toward a lower end of the rotating cylinder (45) in a rotation direction of the rotating cylinder (45), and is inclined with respect to an axial direction of the shaft (8) .

4. The bearing apparatus (15) according to any one of claims 1 to 3, wherein the bearing housing (40) comprises a tray (65) configured to guide lubricating oil to the bearing (20, 21) while receiving the lubricating oil scooped up by a rotation of the slope (70).

5. The bearing apparatus (15) according to any one of claims 1 to 4, wherein the bearing casing (46) comprises an upper end wall (51a) arranged above the rotating cylinder (45) and the bearing (20, 21), and
wherein the upper end wall (51a) has a tapered shape for guiding lubricating oil colliding with the upper end wall (51a) to the bearing (20, 21).

6. The bearing apparatus (15) according to any one of claims 1 to 5, wherein the rotating cylinder (45) comprises a pressure adjustment hole (74) providing communication between a space (SP1) above the rotating cylinder (45) and a space (SP2) below the rotating cylinder (45).

7. The bearing apparatus (15) according to any one of claims 1 to 6, further comprising at least one of a first contact seal (85) disposed between the rotating cylinder (45) and the bearing casing (46) and a second contact seal (86) disposed between the bearing casing (46) and the shaft (8).

8. A vacuum pump apparatus (1) comprising:
a pair of pump rotors (6a, 6b, 6c, 6d);
a pair of shafts (8) fixed to the pair of pump rotors (6a, 6b, 6c, 6d), the pair of shafts (8) extending in a vertical direction;
a motor (10) configured to rotate the pair of pump rotors (6a, 6b, 6c, 6d); and
the bearing apparatus (15) according to any one of claims 1 to 7.

## Patentansprüche

1. Lagervorrichtung (15), die Folgendes aufweist:
ein Lager (20, 21), das konfiguriert ist, um eine Welle (8) zu tragen, die sich in einer vertikalen Richtung erstreckt;
ein Lagergehäuse (40), das konfiguriert ist, um das Lager (20, 21) aufzunehmen;
einen sich drehenden Zylinder (45), der unter dem Lagergehäuse (40) angeordnet ist und an der Welle (8) befestigt ist, wobei der sich drehende Zylinder (45) ein Steigungselement (70) aufweist, das an einer Außenumfangsfläche (45a) des sich drehenden Zylinders (45) geformt ist; und
eine Lagereinfassung (46), welche das Lager (20, 21), das Lagergehäuse (40) und den sich drehenden Zylinder (45) aufnimmt;
**dadurch gekennzeichnet, dass**
der sich drehende Zylinder (45) einen äußeren zylindrischen Teil (72) aufweist, der radial außerhalb des Lagers (20, 21) angeordnet ist, und
ein oberes Ende des äußeren zylindrischen Teils (72) an einer Position angeordnet ist, die höher ist als ein unteres Ende eines Wälzkörpers (21a) des Lagers (20, 21).

2. Lagervorrichtung (15) nach Anspruch 1, wobei das Steigungselement (70) in einem Spalt zwischen einer Außenumfangsfläche (45a) des sich drehenden Zylinders (45) und einer Innenfläche der Lagereinfassung (46) ist.

3. Lagervorrichtung (15) nach Anspruch 1 oder 2, wobei das Steigungselement (70) sich schräg nach unten erstreckt, und zwar von einem oberen Ende des sich drehenden Zylinders (45) zu einem unteren Ende des sich drehenden Zylinders (45) in einer Drehrichtung des sich drehenden Zylinders (45) und bezüglich einer axialen Richtung der Welle (8) geneigt ist.

4. Lagervorrichtung (15) nach einem der Ansprüche 1 bis 3, wobei das Lagergehäuse (40) einen Einsatz (65) aufweist, der konfiguriert ist, um Schmieröl zu dem Lager (20, 21) zu führen, während er Schmieröl aufnimmt, welches durch eine Drehung des Steigungselementes (70) aufgenommen worden ist.

5. Lagervorrichtung (15) nach einem der Ansprüche 1 bis 4, wobei die Lagereinfassung (46) eine obere Endwand (51a) aufweist, die über dem sich drehenden Zylinder (45) und dem Lager (20, 21) angeordnet ist, und wobei die obere Endwand (51a) eine verjüngte Form hat, um Schmieröl, welches mit der oberen Endwand (51a) kollidiert, zum Lager (20, 21) zu leiten.

6. Lagervorrichtung (15) nach einem der Ansprüche 1 bis 5, wobei der sich drehende Zylinder (45) ein Druckeinstellloch (74) aufweist, welches eine Verbindung zwischen einem Raum (SP1) über dem sich drehenden Zylinder (45) und einem Raum (SP2) unter dem sich drehenden Zylinder (45) vorsieht.

7. Lagervorrichtung (15) nach einem der Ansprüche 1 bis 6, welche weiter eine erste Kontaktdichtung (85), die zwischen dem sich drehenden Zylinder (45) und der Lagereinfassung (46) angeordnet ist, und/oder eine zweite Kontaktdichtung (86) aufweist, die zwischen der Lagereinfassung (46) und der Welle (8) angeordnet ist.

8. Vakuumpumpenvorrichtung (1), die Folgendes aufweist:
ein Paar von Pumpenrotoren (6a, 6b, 6c, 6d);
ein Paar von Wellen (8), die an dem Paar von Pumpenrotoren (6a, 6b, 6c, 6d) befestigt ist, wobei das Paar von Wellen (8) sich in einer vertikalen Richtung erstreckt;
einen Motor (10), der konfiguriert ist, um das Paar von Pumpenrotoren (6a, 6b, 6c, 6d) zu drehen; und
die Lagervorrichtung (15) nach einem der Ansprüche 1 bis 7.

## Revendications

1. Appareil de palier (15) comprenant :
un palier (20, 21) configuré pour supporter un arbre (8) s'étendant dans une direction verticale ;
un cage de roulement (40) configuré pour loger le palier (20, 21) ;
un cylindre rotatif (45) disposé en dessous de la cage de roulement (40) et fixé à l'arbre (8), le cylindre rotatif (45) comprenant une pente (70) formée sur une surface circonférentielle externe (45a) du cylindre rotatif (45) ; et
un boîtier de roulement (46) logeant le palier (20, 21), la cage de roulement (40) et le cylindre rotatif (45) ;
**caractérisé en ce que**
le cylindre rotatif (45) comprend une partie cylindrique externe (72) disposée radialement vers l'extérieur du palier (20, 21), et
une extrémité supérieure de la partie cylindrique externe (72) est agencée à une position plus haute qu'une extrémité inférieure d'un roulement (21a) du palier (20, 21).

2. Appareil de palier (15) selon la revendication 1, dans lequel la pente (70) est disposée dans un espace entre une surface circonférentielle externe (45a) du cylindre rotatif (45) et une surface interne du boîtier de roulement (46).

3. Appareil de palier (15) selon la revendication 1 ou 2, dans lequel la pente (70) s'étend obliquement vers le bas depuis une extrémité supérieure du cylindre rotatif (45) vers une extrémité inférieure du cylindre rotatif (45) dans une direction de rotation du cylindre rotatif (45) et est inclinée par rapport à une direction axiale de l'arbre (8).

4. Appareil de palier (15) selon l'une quelconque des revendications 1 à 3, dans lequel la cage de roulement (40) comprend un plateau (65) configuré pour guider de l'huile lubrifiante vers le palier (20, 21) tout en recevant l'huile lubrifiante récupérée par une rotation de la pente (70).

5. Appareil de palier (15) selon l'une quelconque des revendications 1 à 4, dans lequel le boîtier de roulement (46) comprend une paroi d'extrémité supérieure (51a) agencée au-dessus du cylindre rotatif (45) et du palier (20, 21), et
dans lequel la paroi d'extrémité supérieure (51a) a une forme conique pour guider l'huile de lubrification entrant en collision avec la paroi d'extrémité supérieure (51a) vers le palier (20, 21).

6. Appareil de palier (15) selon l'une quelconque des revendications 1 à 5, dans lequel le cylindre rotatif (45) comprend un orifice de réglage de pression (74) assurant une communication entre un espace (SP1) au-dessus du cylindre rotatif (45) et un espace (SP2) en-dessous du cylindre rotatif (45).

7. Appareil de palier (15) selon l'une quelconque des revendications 1 à 6, comprenant en outre au moins un élément parmi un premier joint de contact (85) disposé entre le cylindre rotatif (45) et le boîtier de roulement (46) et un deuxième joint de contact (86) disposé entre le boîtier de roulement (46) et l'arbre (8).

8. Appareil de pompe à vide (1) comprenant :
une paire de rotors de pompe (6a, 6b, 6c, 6d) ;
une paire d'arbres (8) fixée à la paire de rotors de pompe (6a, 6b, 6c, 6d), la paire d'arbres (8) s'étendant dans une direction verticale ;
un moteur (10) configuré pour faire tourner la paire de rotors de pompe (6a, 6b, 6c, 6d) ; et
l'appareil de palier (15) selon l'une quelconque des revendications 1 à 7.
